Europäisches Patentamt

European Patent Office

Office européen des brevets

(19)

(11) Numéro de publication: **0 133 082**
**B1**

(12) # FASCICULE DE BREVET EUROPÉEN

(45) Date de publication du fascicule du brevet:
18.03.87

(21) Numéro de dépôt: **84401414.2**

(22) Date de dépôt: **04.07.84**

(51) Int. Cl.⁴: **B 64 C 1/14,** E 05 B 51/02

(54) Dispositif de sécurité pour l'ouverture d'une porte d'aéronef ouvrant vers l'extérieur en cas de surpression à l'intérieur de cet aéronef et porte ainsi équipée.

(30) Priorité: **08.07.83 FR 8311451**

(43) Date de publication de la demande:
**13.02.85 Bulletin 85/7**

(45) Mention de la délivrance du brevet:
**18.03.87 Bulletin 87/12**

(84) Etats contractants désignés:
**DE GB IT NL**

(56) Documents cité:
**WO-A-84/01404**
**FR-A-2 318 784**
**US-A-3 780 904**

(73) Titulaire: **AEROSPATIALE Société Nationale Industrielle, 37 boulevard de Montmorency, F-75781 Paris Cédex 16 (FR)**

(72) Inventeur: **Bokalot, Jean, 19 Allée des Cévennes, F-31300 Toulouse (FR)**

(74) Mandataire: **Bonnetat, Christian, Cabinet PROPI Conseils 23 rue de Léningrad, F-75008 Paris (FR)**

EP 0 133 082 B1

LIBER, STOCKHOLM 1987

## Description

La présente invention concerne un dispositif de sécurité intervenant lors de l'ouverture de portes d'aéronefs ouvrant vers l'extérieur, en cas de surpression à l'intérieur de cet aéronef. Elle concerne également une porte pourvue d'un tel dispositif de sécurité.

On sait qu'une porte d'aéronef et son encadrement comportent des butées coopérant pour contrecarrer les forces d'éjection de ladite porte vers l'extérieur et que, en position fermée de la porte, les butées de celle-ci sont en appui contre les butées dudit encadrement; une porte dece type équipe, par exemple, l'avion Airbus A300. Aussi, pour ouvrir une telle porte d'aéronef, il faut commencer par lui imprimer un mouvement préalable (de direction sensiblement parallèle à ladite porte) permettant aux butées qu'elle porte de se dégager des butées de l'encadrement. Après ce mouvement de désengagement des butées coopérantes, une simple poussée ou traction permet l'ouverture complète de la porte, généralement selon un mouvement de translation courbe. Le mouvement de désengagement des butées coopérantes peut généralement être commandé par l'intermédiaire d'une poignée intérieure, à la disposition des membres de l'équipage et par une poignée extérieure, à la disposition du personnel de service des aéroports, ces poignées intérieure et extérieure se trouvant sur la porte elle-même.

Par ailleurs, on sait que les aéronefs capables de voler à des altitudes élevées dans l'atmosphère raréfiée, sont pourvus d'un système de pressurisation d'au moins une partie (la cabine) de leur volume pour y maintenir une pression normale. Des soupapes de purge sont prévues pour que, après un vol avec pressurisation, la pression intérieure de l'aéronef soit ramenée à celle régnant au niveau du sol, lorsque l'aéronef atterrit. Cependant, généralement à cause d'un fonctionnement défectueux de ces soupapes de purge, il peut arriver qu'une surpression subsiste à l'intérieur de l'aéronef lorsque l'on actionne la poignée d'ouverture d'une porte. Même si une telle surpression est relativement faible, elle exerce sur la porte une force importante de l'intérieur vers l'extérieur, à cause de la surface importante des portes d'aéronef. Aussi, dés que la porte est dégagée des butées de son encadrement, elle s'ouvre brutalement sous la poussée engendrée par la surpression. Une telle ouverture brutale risque de blesser la ou les personnes se trouvant de part et d'autre de la porte.

La présente invention a pour objet de remédier à ces inconvénients et elle concerne un dispositif de sécurité susceptible d'éliminer les effets d'une telle surpression résiduelle à l'intérieur d'un aéronef, lors de l'ouverture des portes.

A cette fin, selon l'invention, le dispositif de sécurité pour porte d'aéronef ouvrant vers l'extérieur selon un processus faisant intervenir un mouvement préalable permettant à des butées portées par ladite porte de se dégager de butées portées par l'encadrement de celle-ci, après quoi une simple poussée ou traction permet l'ouverture complète de la porte est remarquable selon l'invention en ce qu'il comporte au moins un pêne mobile et une butée d'arrêt montés l'un sur la porte et l'autre sur l'encadrement de celle-ci et susceptibles de coopérer l'un avec l'autre pour interrompre ledit mouvement préalable de dégagement des butées de la porte et des butées de son encadrement et en ce que ledit pêne mobile est commandé par des moyens manométriques recevant les pressions intérieure et extérieure de l'aéronef, de façon que ledit pêne mobile prenne une position rétractée, pour laquelle il ne peut coopérer avec ladite butée d'arrêt, lorsque ladite pression intérieure est sensiblement égale à la pression extérieure et une position saillante, pour laquelle il peut coopérer avec ladite butée d'arrêt, lorsque ladite pression intérieure est supérieure à la pression extérieure.

Ainsi, en cas de surpression à l'intérieur de l'aéronef, le mouvement préalable est arrêté par la coopération du pêne mobile et de la butée d'arrêt et la porte ne peut s'ouvrir complètement de façon brutale. En revanche, ledit mouvement préalable étant au moins en partie effectué, il apparaît des fentes de communication d'air entre la porte et son encadrement, de sorte que l'air en surpression à l'intérieur de l'aéronef peut fuir vers l'extérieur. Dès que les pressions intérieure et extérieure sont devenues sensiblement égales, les moyens manométriques rétractent le pêne mobile et l'ouverture de la porte peut être poursuivie sans danger.

De préférence, afin d'éviter de déclencher le dispositif de sécurité selon l'invention pour des différences de pression minimes, on règle lesdits moyens manométriques pour que ledit pêne mobile ne soit commandé vers sa position saillante que lorsque la pression intérieure dépasse la pression extérieure d'un seuil déterminé. Un tel seuil peut par exemple être fixé à environ 2mb.

La présente invention peut être appliquée aux différentes portes d'un aéronef. Toutefois, elle est particulièrement intéressante pour les portes de la cabine des passagers. De telles portes sont généralement pourvues, en plus des moyens d'ouverture normales, de moyens d'ouverture de secours, commandés par une poignée spéciale, pour pouvoir s'ouvrir rapidement en cas de nécessité. L'ouverture de secours d'une porte entraîne d'ailleurs généralement le déploiement d'un toboggan, normalement plié et contenu dans un coffre solidaire de ladite porte. Il est donc indispensable que le dispositif de sécurité selon l'invention ne puisse gêner ou empêcher l'ouverture de secours d'une telle porte.

Aussi, selon une autre particularité de la présente invention, appliquée à une porte devant pouvoir s'ouvrir rapidement en cas de nécessité, par l'actionnement d'une poignée spéciale, le dispositif de sécurité comporte des moyens susceptibles d'inhiber l'action dudit pêne mobile et commandés par ladite poignée spéciale.

Dans un premier mode de réalisation, de tels moyens d'inhibition peuvent résulter du fait que ladite butée d'arrêt est montée escamotable sous l'action de la poignée spéciale.

Dans un second mode de réalisation, le dispositif de sécurité comporte un distributeur actionné par ladite poignée spéciale et susceptible d'inhiber l'action des moyens manométriques. De plus, ladite poignée spéciale peut être reliée audit pêne mobile pour pouvoir le ramener de sa position saillante à sa position rétractée. Dans ce dernier cas, la liaison entre la poignée spéciale et le pêne mobile est coulissante pour permettre audit pêne mobile de prendre sa position saillante, sous l'action des moyens manométriques, lorsque la poignée spéciale n'est pas actionnée. Une telle liaison coulissante peut être telle que, si le pêne mobile est en position saillante lorsque la poignée spéciale est actionnée, cette poignée commence par inhiber l'action des moyens manométriques, puis ramène le pêne mobile en position rétractée. Cette liaison peut être du type à coulisse à lumière.

Les figures du dessin annexé feront bien comprendre comment l'invention peut être réalisée. Sur ces figures, des références identiques désignent des éléments semblables.

La figure 1 est une vue montrant, depuis l'intérieur d'un aéronef, une porte de cabine pour passagers, en position fermée.

La figure 2 est une vue schématique en bout de la porte fermée de la figure 1.

La figure 3 est une vue schématique en bout, comparable à la figure 2, de la porte de la figure 1 en cours d'ouverture, pendant la phase préliminaire de désengagement des butées de porte des butées d'encadrement.

La figure 4 illustre, en vue de dessus, le mouvement d'ouverture de la porte des figures 1 à 3.

La figure 5 est une vue schématique de face d'un mode de réalisation du dispositif de sécurité conforme à l'invention.

La figure 6 est une vue de dessus du mode de réalisation de la figure 5.

La figure 7 est une vue schématique de face d'une variante de réalisation du dispositif de sécurité conforme à l'invention.

La figure 8 est une vue de dessus du mode de réalisation 5 de la figure 7.

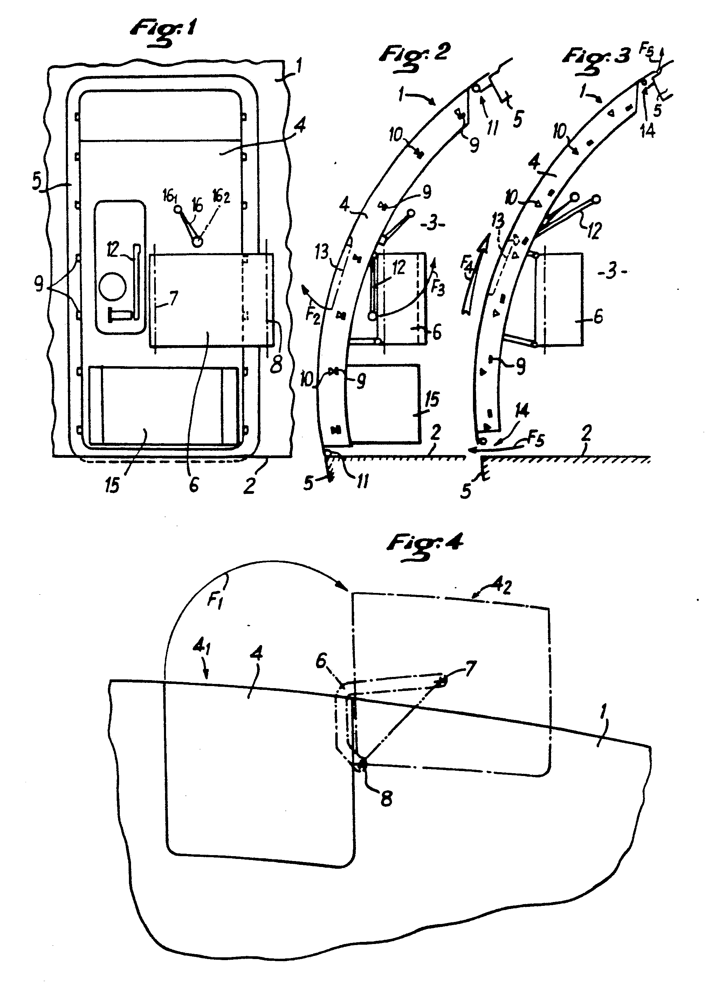

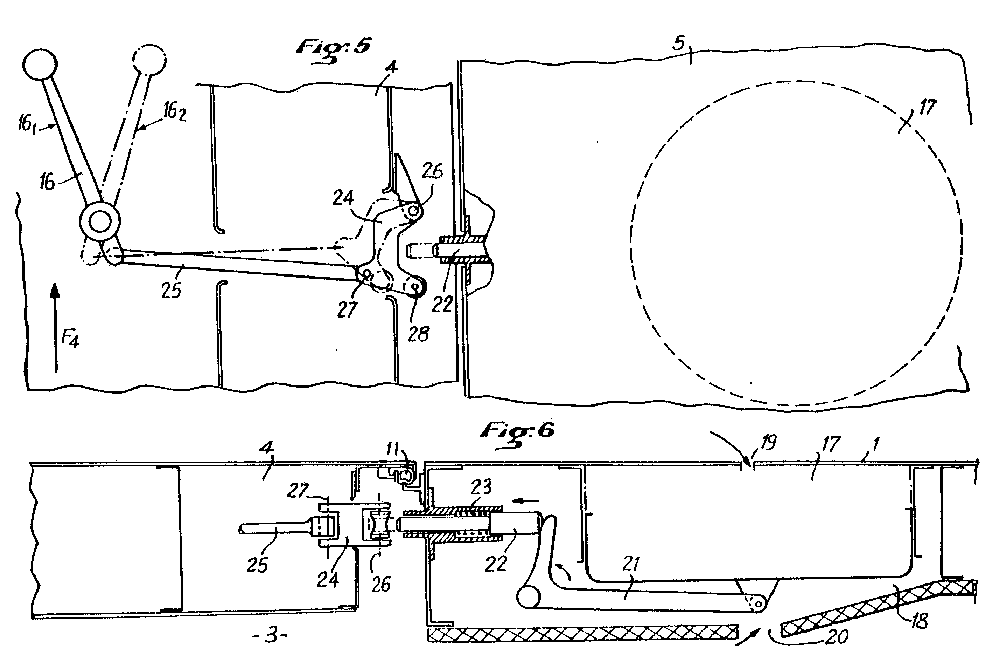

La portion de fuselage 1, montrée par les figures 1 à 4, délimite, avec un plancher 2, une cabine usuelle 3 pour passagers d'un aéronef. Cette cabine 3 est représentée au voisinage d'une porte 4 et de l'encadrement 5 de celle-ci et un système d'articulation 6 permet à la porte 4 de passer, par un mouvement au moins approximativement assimilable à une translation courbe (flèche $F_1$), d'une position $4_1$ de fermeture à une position $4_2$ d'ouverture (voir la figure 4). La porte 4 s'ouvre vers l'extérieur du fuselage 1 et le système d'articulation 6 comporte deux axes d'articulation 7 et 8, sensiblement verticaux, dont l'un (7) est lié à la porte 4 et l'autre (8) à l'encadrement 5.

La porte 4 comporte une pluralité de butées périphérique's 9 qui, en position fermée $4_1$ de la porte 4 (voir la figure 2), s'accrochent derrière des butées périphériques 10, correspondantes de l'encadrement 5. Ainsi, la porte 4 est assurée contre les risques d'éjection vers l'extérieur de l'aéronef, lorsque celui-ci se déplace en atmosphère raréfiée, alors que la cabine 3 est pressurisée. Un système d'étanchéité 11 est prévu à la périphérie de la porte 4 pour que, en position fermée $4_1$, aucune fuite d'air ne puisse avoir lieu entre ladite porte et son encadrement 5.

L'ouverture et la fermeture de la porte 4 sont commandées par une poignée intérieure 12 et une poignée extérieure 13 actionnant elles-mêmes un mécanisme de type connu, non représenté sur les dessins. A partir de la position fermée $4_1$ (voir les figures 1, 2 et 4), la manoeuvre de la poignée 12 ou de la poignée 13 (flèches $F_2$ et $F_3$ de la figure 2) commence par communiquer à la porte 4 un mouvement relatif (flèche $F_4$ de la figure 3) propre à désengager les butées 9 de la porte 4 des butées 10 de l'encadrement 5 et dont la direction générale est parallèle à la surface courbe dans laquelle se trouvent les faces de contact des butées 9 et 10. Dès que ce mouvement préalable $F_4$ a été réalisé, une simple poussée de l'intérieur ou une simple traction de l'extérieur permet d'ouvrir la porte 4 pour l'amener dans sa position $4_2$ d'ouverture maximale (flèche $F_1$).

On comprend aisément que, si une surpression résiduelle règne dans la cabine 3 par rapport à l'extérieur de l'aéronef, la porte 4 passera brutalement à sa position $4_2$ sous l'action de ladite surpression, dès que les butées de porte 9 seront dégagées des butées d'encadrement 10, à la suite du mouvement préalable suivant la flèche $F_4$. Au cours de cette brusque ouverture, la porte 4 pourra blesser des personnes se trouvant aussi bien à l'extérieur qu'à l'intérieur de l'aéronef. L'objet de l'invention est d'éviter ces inconvénients et d'empêcher la porte 4 de quitter brutalement son encadrement 5. Pour cela conformément à l'invention, en cas de surpression intérieure, on interrompt et on bloque provisoirement le mouvement préalable de dégagement de la porte 4 effectué selon la flèche $F_4$ au moment où une fente 14 suffisante apparaît entre ladite porte 4 et son encadrement 5 (voir la figure 3). Ainsi, l'air intérieur en surpression peut s'évacuer vers l'extérieur (flèches $F_5$) de sorte que l'on obtient rapidement un équilibre entre les pressions intérieure et extérieure de l'aéronef.

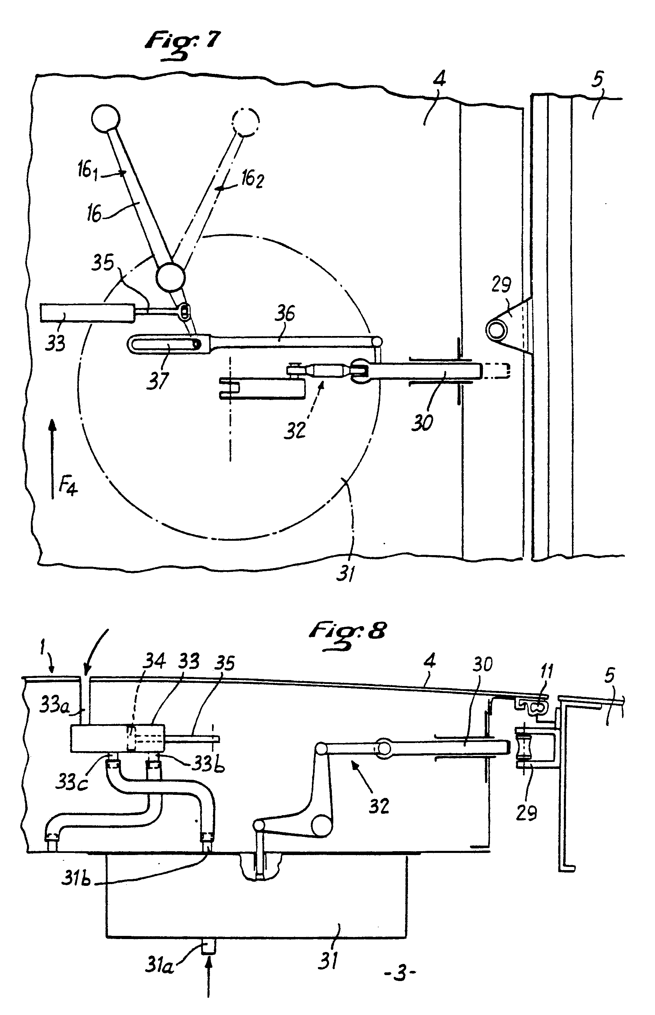

Les figures 5 à 8 montrent deux variantes de réalisation du dispositif selon l'invention pour obtenir ce résultat et appliquées au cas particulier où la porte 4 est équipée de façon usuelle d'un toboggan déployable de secours 15. On sait que, dans ce cas, l'ouverture de la porte 4 suivie du déploiement du toboggan 15 est commandée par la poignée de manoeuvre 12 et avec les mêmes effets mentionnés ci-dessus; cependant, il faut avoir préselectionné l'ouverture de secours au moyen d'une poignée 16 (qui commande un dispositif connu non représenté sur les dessins), qui peut prendre soit une position normale $16_1$ pour laquelle l'ouverture de la porte 4 s'effectue sans déploiement du toboggan 15, soit une position de secours $16_2$ pour laquelle l'ouverture de la porte 4 s'effectue avec déploiement du toboggan 15.

En variante, l'ouverture de secours pourrait être entièrement automatisée et commandée par la seule poignée 16, lorsque celle-ci atteint sa position $16_2$.

Aussi, les modes de réalisation particuliers, donnés à titre d'exemple sur les figures 5 à 8, sont ils sous la dépendance du levier 16.

L'exemple de réalisation des figures 5 et 6 comporte une capsule manométrique 17 enfermée dans un boîtier 18, lié à l'encadrement 5. Par des orifices 19 et 20, la capsule manométrique 17 reçoit respectivement la pression extérieurs à l'aéronef et la pression intérieure de la cabine 3. La capsule manométrique 17 commande, par l'intermédiaire d'un levier 21, un pêne mobile 22 soumis à l'action d'un ressort 23 le pressant contre ledit levier 21. Ainsi, lorsque la pression extérieure à l'aéronef et la pression intérieure à la cabins sont sensiblement égales, le pêne mobile 22 occupe une position rétractée (représentée en traits forts sur les figures 5 et 6), notamment sous l'action du ressort 23 qui ne rencontre pas de résistance de la part du levier 21 commandé par la capsule manométrique 17. En revanche, lorsque la pression intérieure de la cabine 3 est supérieure à la pression extérieure à l'aéronef, par exemple d'une quantité voisine de 2 mb, la capsule 17 fait basculer le levier 21 qui repousse le pêne mobile 22 en direction de la porte 4 et à l'encontre de l'action du ressort 23. Le pêne mobile 22 prend alors la position saillante représentée en traits mixtes.

Par ailleurs, en regard du pêne mobile 22 se trouve une butée escamotable 24, reliée par une tringle 25 au levier 16. La butée escamotable 24 présente la forme d'un croissant et est articulée à l'une de ses cornes, en 26, sur la porte 4. Par ailleurs, la butée escamotable 24 est articulée par son dos, en 27, à la tringle 25. Ainsi, lorsque le levier 16 est dans sa position $16_1$, la butée 24 est en position saillante (représentée en traits pleins sur les figures) pour laquelle le pêne 22 se trouve en regard du creux du croissant. En revanche, lorsque le levier 16 est en position $16_2$, la butée 24 est en position rétractée (représentée en traits pleins sur la figure 5) et est hors d'atteinte du pêne mobile 22, même en position saillante.

Le fonctionnement du dispositif des figures 5 et 6 est le suivant:

1. - en cas d'ouverture normale de la porte 4 au moyen d'une poignée 12 ou 13, le levier 16 se trouve dans la position $16_1$, de sorte que la butée escamotable 24 occupe sa position saillante. Deux cas peuvent alors se produire:

a.- si la pression intérieure à la cabine 3 est sensiblement égale à la pression extérieure à l'aéronef (ou tout au moins ne lui est pas supérieure du seuil de 2 mb), le pêne 22 est dans sa position rétractés échappant à la butée 24, même en position saillante, de sorte que le mouvement de dégagement des butées 9 et 10 s'effectue normalement et que, après ce dégagement, la porte 4 peut être amenée en position ouverte $4_2$ par simple poussée ou traction;

b.- si la pression intérieure à la cabine 3 est supérieure à la pression extérieure à l'aéronef d'une valeur supérieure audit seuil de 2 mb, le pêne 22 est dans sa position saillante et son extrémité se trouve donc entre les cornes de la butée escamotable 24, également en position saillante. Par suite, le mouvement de dégagement des butées 9 st 10 est bloqué par la coopération de l'extrémité du pêne mobile 22 et de la corne 28 de la butée 24, opposée à l'articulation 26. Dans cette position de blocage, la porte 4 a suffisamment bougé pour que les fentes 14 aient apparu, c'est-à-dire pour que l'air en surpression à l'intérieur de la cabine puisse s'évacuer vers l'extérieur. Dès que les pressions intérieure et extérieure sont égalisées, la capsule 17 commande le pêne 22 à la rétraction, de sorte que l'extrémité de celui-ci peut échapper à la corne 28. On peut alors poursuivre l'ouverture de la porte 4 jusqu'à atteindre la position $4_2$.

2.- en cas d'ouverture de secours de la porte 4 au moyen de la poignée 12 avec préselection au moyen de la poignée 16 , celle-ci se trouve alors dans sa position $16_2$, de sorte que la butée 24 est en position rétractée.

Quelle que soit la position du pêne mobile 22 (saillante ou rétractée), l'extrémité de celui-ci échappe alors à la corne 28 de la butée escamotable 24 et la porte 4 s'ouvre d'urgence, indépendamment des valeurs relatives de pression à l'intérieur et à l'extérieur de l'aéronef.

Dans la variante de réalisation du dispositif selon l'invention, montrée par les figures 7 et 8, on a prévu une butée fixe 29, montée sur l'encadrement 5, et un pêne mobile 30, monté sur la porte 4 et commandé par une capsule manométrique 31, par l'intermédiaire d'une tringlerie 32. L'une des entrées 31a de la capsule manométrique 31 reçoit en permanence la pression de la cabine 3. En revanche, l'autre entrée 31b de ladite capsule manométrique 31 est susceptible de recevoir soit la pression extérieure à l'aéronef, soit la pression de la cabine 3. Pour cela, on prévoit un distributeur 33 comportant une entrée 33a recevant la pression extérieure à l'aéronef, une entrée 33b recevant la pression intérieure à la cabine 3, une sortie 33c reliée à l'entrée 31b de la capsule manométrique 31 et un piston 34 susceptible de mettre la sortie 33c en communication soit avec l'entrée 33a, soit avec l'entrée 33b. Le piston 34 est pourvu d'une tige de piston 35 articulée sur le levier 16.

Lorsque le levier 16 est dans sa position $16_1$, le piston 34 fait communiquer l'entrée 33a avec la sortie 33c du distributeur 33, de sorte que l'entrée 31b de la capsule manométrique 31 reçoit la pression extérieure à l'aéronef. En revanche, lorsque le levier 16 est dans sa position $16_2$, le piston 34 fait communiquer l'entrée 33b avec la sortie 33c du distributeur 33, de sorte que l'entrée 31b de la capsule manométrique 31 reçoit la pression intérieure de la cabine 3.

Par ailleurs, le pêne 30 est relié au levier 16 par une coulisse 36, pourvue d'une lumière 37 dans laquelle peut coulisser le levier 16.

Le fonctionnement du dispositif des figures 7 et 8 est le suivant:

1.- en cas d'ouverture normale de la porte 4 au moyen d'une poignée 12 ou 13, le levier 16 se trouve dans la position $16_1$, de sorte que le distributeur 33 adresse la pression extérieure sur l'entrée 31b de la capsule manométrique 31. Deux cas peuvent alors se produire:

a.- si la pression intérieure à la cabine 3 est sensiblement égale à la pression extérieure à l'aéronef (ou tout au moins ne lui est pas supérieure du seuil de 2mb), le pêne 30 est commandé par la capaule 31 à sa position rétractée (représentée en traits pleins sur les figures) échappant à la butée 29, de sorte que le mouvement de dégagement des butées 9 et 10 s'effectue normalement et que, après ce dégagement, la porte 4 peut être amené en position ouverte 42 par simple poussée ou traction;

b. si la pression intérieure à la cabine 3 est supérieure à la pression extérieure à l'aéronef d'une valeur supérieure audit seuil de 2 mb, le pêne 30 est dans sa position saillante (représentée en pointillés sur la figure 7) et son extrémité dépasse l'aplomb de la butée fixe 29. Par suite, le mouvement de dégagement des butées 9 et 10 est bloqué par la coopération du pêne mobile 30 et de la butée 29. L'air intérieur en surpression s'échappe par les fentes 14 et dès que les pressions intérieure et extérieure sont égalisées, la capsule 31 commande le pêne 30 à la rétraction par l'intermédiaire de la tringlerie 32, de sorte qqu'il peut échapper à la butée 29. On peut alors poursuivre l'ouverture de la porte 4 jusqu'à atteindre la position $4_2$.

2.- En cas d'ouverture de secours de la porte 4, la poignée 16 est passée de la position $16_1$ à la position $16_2$. Il en résulte deux actions:

a. tout d'abord, le distributeur est commandé par la poignée 16 pour faire communiquer l'entrée 33b avec la sortie 33c. La capsule manométrique 31 reçoit donc la pression de la cabine sur ces deux entrées 31a et 31b et rétracte le pêne 30 si celui-ci était en position saillante, ou le maintient en position rétractée.

b. de plus, si le pêne 30 était en position saillante, l'action sur la poignée 16 le rétracte ensuite de façon forcée par l'intermédiaire de la coulisse 36. Si le pêne était déjà en position rétractée, la poignée 16 se déplace simplement dans la lumière 37 de la coulisse 36. Dès que la poignée 16 a atteint la position $16_2$, le pêne 30 est de toute façon bloqué en position rétractée.

Ainsi, en ouverture de secours de la porte 4, quelle que soit la position initiale du pêne 30, l'ouverture s'effectue sans gêne.

Bien entendu, quoique les exemples représentés sur les figures aient montré l'application de l'invention à des portes équipées de dispositif d'ouverture de secours, il va de soi que l'invention n'est pas limitée à ce type de porte.

## Revendications

1.- Dispositif de sécurité pour porte (4) d'aéronef ouvrant vers l'extérieur selon un processus faisant intervenir un mouvement préalable permettant à des butées (9) portées par ladite porte (4) de se dégager de butées (10) portées par l'encadrement (5) de celle-ci, après quoi l'ouverture complète de la porte est obtenue par simple poussée ou traction, caractérisé en ce qu'il comporte au moins un pêne mobile (22,30) et une butée d'arrêt (24, 29), montés l'un sur la porte (4) et l'autre sur l'encadrement (5) de celle-ci et susceptibles de coopérer l'un avec l'autre pour interrompre ledit mouvement préalable de dégagement des butées (9) de la porte (4) des butées (10) de l'encadrement (5) et en ce que ledit pêne mobile (22, 30) est commandé par des moyens manométriques (17, 31) recevant les pressions intérieure et extérieure à l'aéronef, de façon que ledit pêne mobile (22, 30) prenne une position rétractée, pour laquelle il ne peut coopérer avec ladite butée d'arrêt (24, 29), lorsque ladite pression intérieure est sensiblement égale à la pression extérieure et une position saillante, pour laquelle il peut coopérer avec ladite butée d'arrêt, lorsque ladite pression intérieure est supérieure à la pression extérieure.

2.- Dispositif de sécurité selon la revendication 1, caractérisé en ce que le pêne mobile (22, 30) est commandé par les moyens manométriques (17, 31) vers sa position saillante lorsque la pression intérieure dépasse la pression extérieure d'un seuil déterminé.

3.- Dispositif de sécurité selon l'une des revendications 1 ou 2, appliqué à une porte (4) devant pouvoir s'ouvrir rapidement en cas de nécessité, par l'actionnement d'une poignée spéciale (16),
caractérisé en ce qu'il comporte des moyens (24, 33) susceptibles d'inhiber l'action dudit pêne mobile (22, 30) et commandés par ladite poignée spéciale (16).

4.- Dispositif de sécurité selon la revendication 3, caractérisé en ce que ladite butée d'arrêt (24) est montée escamotable sous l'action de la poignée spéciale (16).

5.- Dispositif de sécurité selon la revendication 3, caractérisé en ce qu'il comporte un distributeur (33) actionné par ladite poignée spéciale (16) et susceptible d'inhiber l'action des moyens manométriques (31).

6.- Dispositif de sécurité selon la revendication 5, caractérisé en ce que la poignée spéciale (16) est reliée audit pêne mobile (30) pour pouvoir le ramener de sa position saillante à sa position rétractée.

7.- Dispositif de sécurité selon la revendication 6, caractérisé en ce que la liaison (36, 37) entre la poignée spéciale (16) et le pêne mobile (30) est coulissante pour permettre audit pêne mobile (30) de prendre sa position saillante, sous l'action des moyens manométriques (31) lorsque la poignée spéciale (16) n'est pas actionnée.

8.- Dispositif de sécurité selon la revendication 7, caractérisé en ce que ladite liaison coulissante (36, 37) est telle que, si le pêne mobile (30) est en position saillante lorsque la poignée spéciale est actionnée, cette poignée commence par inhiber l'action des moyens manométriques (31), puis ramène le pêne mobile (30) en position rétractée.

9.- Dispositif de sécurité selon la revendication 8, caractérisé en ce que ladite liaison coulissante (36, 37) est du type coulisse (36) pourvue d'une lumière (37).

10.- Porte (4) d'aéronef, caractérisée en ce qu'elle comporte au moins une partie du dispositif de sécurité selon l'une quelconque des revendications 1 à 9.

## Patentansprüche

1. Sicherheitsvorrichtung für eine Flugzeugtür (4), die sich nach außen nach einem Verfahren öffnet, demzufolge durch eine vorläufige Bewegung die in der Tür (4) eingesetzten Anschläge (9) von den am Türrahmen (6) sitzenden Anschlägen(10) freigegeben werden, so daß ein vollständiges Öffnen der Tür durch einfaches Drücken oder Ziehen erreicht wird, gekennzeichnet durch zumindest einen beweglichen Riegel (22, 30) und einen Anschlag (24, 29), von denen der eine an der Tür (4) und der andere am Türrahmen (5) befestigt sind und beide miteinander zusammenarbeiten können, so daß de vorläufige Bewegung zur Freigabe der Anschläge (9) an der Tür von den Anschlägen (10) am Türrahmen unterbrochen wird, und daß der bewegliche Riegel (22, 30) durch manometrische Einrichtungen (17, 31) gesteuert wird, denen der Flugzeuginnen- und -außendruck gemeldet wird, so daß der Riegel (22, 30) eine eingezogene Stellung einnimmt, von der aus er mit dem Anschlag (24, 29) nicht zusammenarbeiten kann, wenn der Innendruck im wesentlichen dem Außendruck entspricht, und eine vorstehende Stellung einnimmt, von der aus er mit dem Anschlag (24, 29) zusammenarbeiten kann, wenn der Innendruck über dem Außendruck liegt.

2. Vorrichtung nach Anspruch 1, dadurch gekennzeichnet, daß der Riegel (22, 30) durch manometrische Einrichtungen (17, 31) zur Einnahme der vorstehenden Stellung gesteuert wird, wenn der Innendruck den Außendruck um einen bestimmten Stellenwert übersteigt.

3 Vorrichtung nach einem der Annsprüche 1 oder 2 zur Verwendung mit einer Tür (4), die im Notfall durch Betätigung eines besonderen Handgriffs (16) schnell geöffnet werden muß, gekennzeichnet durch Einrichtungen (24,33), durch die die Wirkung des Riegels (22, 30) unterbunden wird und die durch den besonderen Handgriff (16) gesteuert werden.

4. Vorrichtung nach Anspruch 3, dadurch gekennzeichnet, daß der Anschlag (24) durch Betätigen des Handgriffs (16) einziehbar ist.

5. Vorrichtung nach Anspruch 3, gekennzeichnet durch einen vom Handgriff (16) zu betätigenden Verteiler (33), durch den die manometrischen Einrichtungen (31) wirkungslos gemacht werden.

6. Vorrichtung nach Anspruch 5, dadurch gekennzeichnet, daß der Handgriff (16) mit dem Riegel (30) verbunden ist, um diesen aus seiner vorstehenden Stellung in die eingezogene Stellung führen zu können.

7. Vorrichtung nach Anspruch 6, dadurch gekennzeichnet, daß die Verbindung (36, 37) zwischen Handgriff (16) und Riegel (30) aufschiebbar ausgebildet ist, so daß der Riegel (30) unter der Wirkung der manometrischen Einrichtungen (37) bei Nichtbetätigung des Handgriffs (16) seine vorstehende Stellung einnehmen kann.

8. Vorrichtung nach Anspruch 7, dadurch gekennzeichnet, daß die aufschiebbare Verbindung (36,37) so beschaffen ist, daß, wenn der Riegel (30) bei Betätigung des Hangriffs seine vorstehende Stellung einnimmt, der Handgriff die manometrischen Einrichtungen (31) nicht wirksam werden zu lassen beginnt und dann den Riegel (30) in die eingezogene Stellung bringt.

9. Vorrichtung nach Anspruch 8, dadurch gekennzeichnet, daß als aufschiebbare Verbindung (36, 37) eine Schwinge verwendet wird, in die ein Langloch (37) eingelassen ist.

10. Flugzeugtür, gekennzeichnet durch zumindest einen Teil der Sicherheitsvorrichtung nach einem der vorhergehenden Ansprüche.

## Claims

1 Safety device for an aircraft door (4) opening outwardly by a preliminary movement enabling stops (9) borne by said door (4) to be disengaged from stops (10) borne by the frame (5) thereof, after which complete opening of the door is obtained by a simple thrust or pull, characterized in that it comprises at least one mobile lock (22, 30) and one stop (24, 29), one mounted on the door (4) and the other on the frame (5) thereof and adapted to cooperate with one another to interrupt the preliminary movement of disengagement of the stops (9) on the door (4) and the stops (10) on the frame (5), and in that said mobile lock (22, 30) is controlled by manometric means (17, 31) receiving the pressures inside and outside the aircraft, so that said mobile lock (22, 30) takes a retracted position, for which it cannot cooperate with said stop (24, 29) when said inside pressure is substantially equal to the outside pressure, and a projecting position for which it can cooperate with said stop when said inside pressure is greater than the outside pressure.

2 - Safety device according to claim 1, characterized in that the mobile lock (22, 30) is controlled by the manometric means (17, 31) towards its projecting position when the inside pressure exceeds the outside pressure by a determined threshold.

3 - Safety device according to any of claims 1 or 2, applied to a door (4) having to be able to open quickly if necessary, by actuation of a special handle (16), characterized in that it comprises means (24, 33) adapted to inhibit the action of said mobile lock (22, 30) and controlled by said special handle (16).

4 - Safety device according to claim 3, characterized in that said stop (24) is mounted so as to be retractable under the action of the special handle (16).

5- Safety device according to claim 3, characterized in that it comprises a distributor (33) actuated by said special handle (16) and capable of inhibiting the action of the manometric means (31).

6 - Safety device according to claim 5, characterized in that the special handle (16) is connected to said mobile lock (30) so as to be able to return it from its projecting position to its retracted position.

7 - Safety device according to claim 6, characterized in that the connection (36, 37) between the special handle (16) and the mobile lock (30) is sliding in order to allow said mobile lock (30) to take its projecting position, under the action of the manometric means (31) when the special handle (16) is not actuated.

8 - Safety device according to claim 7, characterized in that said sliding connection (36, 37) is such that, if the mobile lock (30) is in projecting position when the special handle is actuated, this handle begins by inhibiting the action of the manometric means (31), then returns the mobile lock (30) into retracted position.

9 - Safety device according to claim 8, characterized in that said sliding connection (36, 37) is of the slide (36) type provided with a slot (37).

10 - Aircraft door (4), characterized in that it comprises at least part of the safety device according to any one of claims 1 to 9.

**Fig. 1**

**Fig. 2**

**Fig. 3**

**Fig. 4**

Fig. 5

Fig. 6

- 3 -

0 133 082

**Fig. 7**

**Fig. 8**

-3-